# EUROPEAN PATENT SPECIFICATION

(11) **EP 3 005 751 B1**
(45) Date of publication and mention of the grant of the patent: **10.05.2017**
(21) Application number: 14736503.5
(22) Date of filing: 23.05.2014
(51) Int. Cl.: H04W 4/02

(54) **SYSTEM FOR MAINTAINING THE INTEGRITY OF A TOUR GROUP**
SYSTEM ZUR AUFRECHTERHALTUNG DER VOLLSTÄNDIGKEIT EINER REISEGRUPPE
SYSTÈME DE MAINTIEN DE L'INTÉGRITÉ D'UN GROUPE DE VOYAGE

(30) Priority: 24.05.2013 US 201361827344 P; 11.12.2013 US 201361914482 P; 14.02.2014 US 201414181140
(43) Date of publication of application: 13.04.2016
(73) Proprietor: Worldstrides, Charlottesville, VA 22902 (US)
(72) Inventor: YU, James, Shao-Ping, Charlottesville, VA 22902 (US); GERBER, James, Carl, Charlottesville, VA 22902 (US)
(74) Representative: Blumbach Zinngrebe
(86) International application number: PCT/US2014/039374
(87) International publication number: WO 2014/190279

(56) References cited:
- US-A1- 2010 238 033
- US-A1- 2010 290 355

## Description

### Cross Reference to Related Applications

This case claims benefit of the following U.S. applications:
a) U.S. provisional application No. 61/827,344;
b) U.S. provisional application No. 61/914,482.;
c) U.S. nonprovisional application No. 14/181,140.

### Field of the Invention

The present invention relates to systems, methods, and devices for physical monitoring and control of a group of cooperating individuals in a public setting; in particular, the present invention relates to such systems, methods, and devices that are based on mobile telecommunication terminals.

### Background of the Invention

Tourism is a popular activity, and people of all ages and backgrounds engage in it. Such people are commonly referred to as "tourists". Tourism typically involves traveling to places that are not well known to the tourists, and this might cause discomfort, risks, or otherwise reduce the quality of the experience. Therefore, it is common, for tourists, to seek guidance in various forms. In many cases, this is accomplished by tourists traveling as a group (hereinafter "tour group") under the guidance of one or more guides (hereinafter "tour leader").

Tourists that are part of a tour group (hereinafter "tour participants") benefit in many ways. For example, a tour leader typically provides information about places of interest, historical information, assistance with the local language, etc. However, there are many situations in which a very important function performed by the tour leader has to do with safety and security. This is especially so when tour participants are minors whose parents have delegated to the tour leader responsibility for their safety. In such situations, maintaining the integrity of the tour group is a primary task for the tour leader.

Maintaining the integrity of a tour group involves identifying tour participants that are straying too far from the rest of the group to the point where they might no longer hear or see the tour leader or, worse, lose their way and become unable to rejoin the group. Such straying participants must be alerted to the fact that they are straying too far, and must be directed to rejoin the rest of the group. If the group is very small (e.g., five or fewer participants), the tour leader might be able to keep visual contact with all tour participants and simply call them back when they stray too far. However, with larger groups, a better solution commonly practiced in the prior art is for the tour leader to be assisted by chaperones.

Chaperones are individuals who are given the task of monitoring tour participants to help identify participants that are straying too far, help alert those participants, and help direct them to rejoin the group. When tour participants are minors, chaperones might be teachers or parents or other adults. The larger the group, the more chaperones are needed.

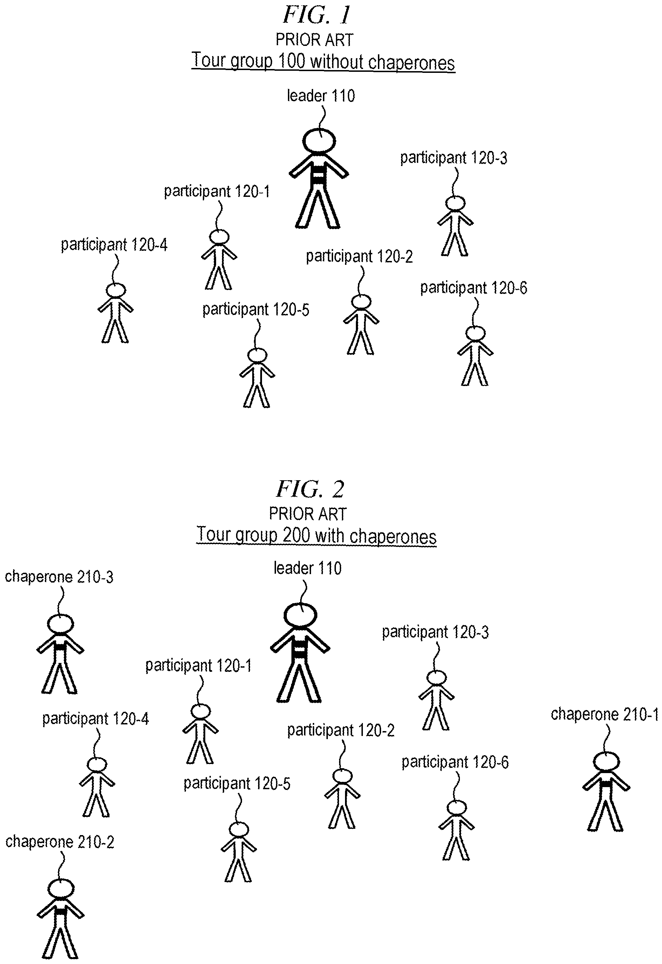

**Figure 1** depicts tour group 100 in accordance with the prior art. Tour group 100 comprises tour leader 110 and participants 120-1 through 120-6. Tour group 100 does not comprise any chaperones, and the tour leader has the full responsibility of monitoring the movements of the six tour participants.

**Figure 2** depicts tour group 200 in accordance with the prior art. Tour group 100 comprises tour leader 110, participants 120-1 through 120-6, and chaperones 210-1 through 210-3. The three chaperons have positioned themselves near but outside the group, and are in different positions so as to increase their ability to monitor tour participants. Having chaperones in a group provides several advantages: for example, when one tour participant strays from the group, one chaperone can follow that tour participant and leave the other chaperones to monitor the rest of the group; also, the tour leader can be more effective at acting as a tour guide and performing other functions if the responsibility of maintaining tour-group integrity is shared with the chaperones.

Although chaperones are an effective solution to the problem of maintaining the integrity of a tour group, there are significant disadvantages; for example, it is difficult to recruit a sufficient number of chaperones in many situations, and if the chaperones are paid for their services, the associated costs can be high. Also, even in the best of circumstances, there is always the possibility that a tour participant might elude the chaperones and stray from the group nonetheless. It is unfortunate but true that reports of schoolchildren becoming lost while participating in school trips and similar activities are in the news on a regular basis.

It would be advantageous to have a less expensive and more reliable means of monitoring tour participants and helping them rejoin the tour group when they stray.

### Summary of the Invention

In situations where people, and especially children, might get lost, several systems in the prior art offer solutions based on radio signals. For example, U.S. Pat. No. 8,102,316 teaches a system wherein wireless transponders are embedded in articles of clothing worn by individuals to be monitored by a guardian. The guardian carries a GPS-enabled cellphone that can communicate with the transponders. The location of the transponders is estimated via triangulation with the assistance of, for example, a cellular telephone tower. The location of the transponder is compared to the location of the guardian (as obtained, for example, through GPS). The distance between the two can then be calculated based on the two locations. If the distance is found to be too large, the system can initiate a missing-person search.

The system outlined in the previous paragraph suffers from several disadvantages: First of all, the requirement that each of the individuals to be monitored carry a transponder embedded in their clothes is onerous and difficult to enforce, especially when the individuals are children or teen-agers. It is especially true with teen-agers that convincing them to wear a particular item of clothing can be difficult to accomplish. The inventors recognized that any device that teen-agers are expected to carry for the purpose of monitoring would have to be something they are eager and willing to have on their body at all times. Also, depending on the cooperation of a cellular network to identify transponder location through triangulation means that, if such network is unavailable or does not have the required triangulation capability, the system will fail to work as expected. Similarly, reliance on GPS location means that the system will also fail to work as expected whenever GPS location is unavailable. It is well known that GPS availability in dense urban environments is spotty, and such environments are precisely where such a system would be most needed. Finally, the system will not work in areas where there is no cellular coverage.

Another possible solution to the problem is taught in U.S. Publ. Pat. App. No. 2005/0200487. The application teaches a method and system whereby members of a group carry wireless monitor devices that can communicate with one another. When the signal from one monitor, as received by another monitor, becomes too weak, the receiving monitor generates an alert signal. This solution also suffer from several disadvantages: The monitors are expensive and, much like the other solution, there is the problem of convincing monitored individuals to carry the monitors at all times. Also, alerting just the individual that carries a receiving monitor is of limited usefulness; in a tour group, both the tour participant that strays from the group and the tour leader should be notified, and, especially if the tour participant is a child, it might be necessary to notify additional entities; for example, it might be useful to notify chaperones or appropriate authorities that can initiate an organized search for the child.

Furthermore, the U.S. Pat. App. No. 2010/0290355 A1 discloses examples of achieving quality of service in a wireless local area network via meeting communication channel performance criteria to include a minimum signal-to-noise plus interference ratio and a proportional fairness limit.

The U.S. Pat. App. No. 2010/0238033 A1 is directed to a tracking device, system and method that may utilize GPS, global system for mobile communications (GSM), including using triangulation, and/or wireless local area network (WLAN) technologies, wherein embodiments employ a wearable or attachable device to track persons, such as children or the elderly, or objects and wherein unauthorized removal, destruction, or tampering of the tracking device may result in alerts being sent out to a variety of monitoring stations.

Embodiments of the present invention do not exhibit any of the disadvantages of the prior art. The present invention takes advantage of the wide availability of smartphones. The term "smartphones" is commonly used to refer to a category of mobile telecommunication terminals which, unlike traditional cellphones, offer several advanced functionalities besides telephone and messaging connectivity to a cellular network. Owners of smartphones are, typically, emotionally attached to them and eagerly carry them with themselves at all times without much need for enticements to do so. This is especially true of teen-agers. Most smartphones have, in addition to the traditional cellular-telephony functionality, one or more wireless transceivers suitable for connection to a wireless local-area network (WLAN) such as, for example, so-called WiFi and Bluetooth WLANs.

Smartphones also have the capability to upload and store, in their memory, custom programs, commonly referred to as "apps" that can be executed in the smartphone's processor. Such programs are a form of software, which comprises instructions suitable for processor execution. The memory for such programs is, typically, non-transitory, such that, once an app is uploaded, it can be configured to automatically run whenever the smartphone is turned on, without requiring it to be uploaded every time, and without explicit human action.

In accordance with embodiments of the present invention, a first app is loaded into a smartphone carried by the tour leader, and a second app is loaded into each of the smartphones carried by tour participants. The apps uses the smartphones' WLAN functionalities to set up a WLAN wherein the tour leader's smartphone acts as master of the WLAN, and the tour participants' smartphones act as slaves of the WLAN.

In one embodiment of the present invention, the WLAN slaves continually monitor a WLAN signal transmitted by the master. If the strength of such signal drops below a minimum threshold, as received by one of the slaves, it means that the slave has strayed too far from the master. Since the master is carried by the tour leader, it means that the tour participant that is carrying the slave has strayed too far from the group. When such a condition is detected, other functionalities of typical smartphones can be used to help remedy the situation, as described below.

Typical smartphones are equipped with advanced human-interface devices such as, for example, a loudspeaker and a touchscreen, and with sophisticated geolocation capabilities that include the ability to download and store extensive geographic databases and programs for routing and navigation, besides, of course, being able to locate themselves. And smartphones can also connect to the Internet, in addition to providing the customary connectivity to the Public Telephone Network that is provided by all cellphones.

Through the functionalities outlined in the previous paragraph, as soon as it is detected that a tour participant has strayed from the tour group, both the tour leader and the tour participant are alerted of the situation via, for example, a loud sound accompanied by a descriptive display on the smartphone's screen. Other entities, such as chaperones, can be alerted as needed. Compared to the prior art, the fact that a WLAN is utilized for interconnecting the smartphones offers several advantages: (i) no costs are incurred for additional devices or hardware because all the necessary WLAN wireless-communication functionalities are available in most typical smartphones; (ii) the wireless range achievable by typical WLANs such as, for example WiFi WLANs, is more than adequate to cover most typical tour-group sizes; (iii) The WLAN provides a flexible communication capability that interconnects all the smartphones in the tour group, making it easy to customize apps on different smartphones to achieve a variety of functionalities; for example, even though only one smartphone might detect that a tour participant has strayed from the group, an app in that smartphone can quickly notify all the other smartphones through the WLAN.

When a tour participant strays from the group, the geolocation capability of the tour participant's smartphone can be activated for the purpose of assisting the tour participant in rejoining the tour group. For example, the smartphone can start keeping track of the tour participant's location for the purpose of assisting the tour participant in rejoining the group. Better yet, the tour participant's smartphone can communicate with the tour leader's smartphone, such that the two smartphones communicate to one another their respective locations and, together or individually, they devise a path for the tour participant to follow in order to rejoin the group. The tour participant's smartphone can then provide directions to the tour participant, perhaps as spoken directions and/or with the assistance of maps or other navigation aids displayed on the smartphone's screen. The tour participant can then follow such directions and, thereby, follow the path leading him/her back to the tour group.

Even though the WLAN is convenient for interconnecting the smartphones in the tour group, there are situations in which WLAN connectivity might not be available. This is especially true when a tour participant strays from the tour group. It is so because, if the distance between the tour participant and the tour leader is excessive, signal strengths might be too weak to support adequate WLAN connectivity. In such situations, smartphones' capability to connect to the internet is advantageous. Connectivity with the internet is available to smartphones through a so-called cellular network which is more formally known as a wireless wide-area network (WWAN). Through the WWAN, the tour leader's smartphone and the tour participant's smartphone can communicate with one another even in the absence of WLAN connectivity. Embodiments of the present invention that take advantage of WWAN connectivity can implement the functionalities presented in the previous paragraphs even in the absence of WLAN connectivity.

Connectivity through a WWAN enables some embodiments of the present invention to have additional functionalities. Many such embodiments comprise a Central Command Center (CCC) that is connected to the Internet and, therefore, can communicate with the tour leader's smartphone and all tour participants' smartphones through the WWAN. The CCC can keep track of the status of all smartphones in the tour group and, when a participant strays from the group, it can coordinate the necessary activities. The CCC can also respond to queries from appropriate authorities (e.g., parents, tour organizers, etc.) and activate search-and-rescue operations when warranted. These CCC functions might be performed through automated systems based on digital processors, or might be performed with the assistance of human operators. In particular, interactions with parents of children that are lost are probably best handled by human operators. The CCC can also store all the necessary apps and manage uploading and updating of such apps to the smartphones; however, in embodiments wherein tour participants might forget to upload the necessary apps in advance, it can be advantageous for the tour leader's smartphone to store all the necessary apps. The apps can then be uploaded and installed into the tour participants' smartphones through the WLAN at a time when the tour leader is physically near the tour participants, so that the tour leader can explicitly verify that all tour participants have properly installed the necessary apps in their smartphones.

An example of a simplified scenario for how a tour group might use an embodiment of the present invention is as follows. A tour leader, prior to meeting with tour participants, loads all the necessary software into the non-transitory memory of his/her smartphone. Such software is in the form of apps that can be installed and executed on a smartphone. At a later time, the tour leader meets the tour participants. For example, the tour participants might be a group of high-school students visiting an art museum under the guidance of the tour leader. When the tour leader meets the students, the tour leader configures his/her smartphone as a WiFi hotspot, and verbally communicates to the students the name and password for the hotspot. The students configure their smartphones as needed to connect to the WiFi hotspot.

After connecting to the hotspot, the students are instructed by the tour leader on how to download and install a tour-participant app into their smartphone. Each student does it, and, when the app is activated, it prompts the student for his/her name. Each student enters his/her name at the prompt.

In the meantime, the tour leader activates a different app on his/her smartphone. The tour-leader app looks at a list of the WiFi devices that are connected to the hotspot, and, for each device, it sets up a connection with the tour-participant app. The tour-leader app asks each tour-participant app for the name of the student, as was entered at the prompt. It looks at a preloaded list of names that the tour leader had provided in advance, and displays any mismatches or missing names on the screen of the tour leader's smartphone. Some students might be absent, while others might have spelled their names differently from the list; in any case, the tour leader interacts with the tour-leader app as needed to resolve all such issues until the tour-leader app, through the WiFi hotspot, has established connections with all the tour-participant apps installed in all students' smartphones. The tour can now begin.

The tour leader leads the students through the rooms of the museum. The tour leader is free to concentrate on providing interesting and stimulating explanations about works of art without having to worry about keeping track of the students. This is because the tour-leader app in the tour leader's smartphone remains connected with all the students' smartphones, and continually checks that all the signals are strong.

Occasionally, one of the students might lag behind, for example, when the group moves from one room of the museum to another. When that happens, the signal associated with the WiFi connection between the tour leader's smartphone and that student's smartphone becomes weak. The tour-participant's app running on the student's smartphone detects the weakening signal and generates a discreet beeping sound while displaying "hurry up!" on the screen of the student's smartphone. The student follows the exhortation and, within seconds, the signal is again strong. The tour-participant's app stops beeping.

The tour-leader app in the tour leader's smartphone also detects the weakening signal. It communicates with the tour-participant app which confirms that a beeping alert has been generated. The signal becomes again strong within a few seconds, and, therefore, the tour-leader app does not take any particular action other than logging the occurrence of the event.

Unfortunately, during the tour, one of the students becomes distracted while admiring a notable painting, and does not notice the beeping sound. In the meantime, the rest of the group keeps moving and, soon, the WiFi connection between the tour-leader's hotspot and the student smartphone is lost. Immediately, the tour-leader app generates a beeping sound loud enough that the tour leader can't possibly miss it. The tour-participant app in the student's smartphone does the same. The tour leader looks at his/her smartphone screen and sees the name and picture of the lost student. Immediately, the tour leader directs the group to retrace its steps looking for the student.

Unfortunately, the lost student becomes confused and, instead of staying put, as instructed by the tour-participant app, he/she starts wandering through the museum. In the meantime, the tour group is attempting to locate the lost student. The task is aided by the fact that smartphones have the ability to locate themselves. While the apps were monitoring the quality of the WiFi signal, they were also collecting location information and exchanging it between themselves. The tour-leader app displays on the tour leader's smartphone's screen the location of where the student was when the signal was lost, such that the tour leader can now "follow the breadcrumbs" and go to where the student was when the signal was lost.

The student's smartphone also collects location information and, while the student wanders through the museum, the tour-participant app keeps track of the student's movements and displays, on the student's smartphone's screen, directions ("breadcrumbs") for the student to follow in order to return to where he/she was when the signal was lost. Unfortunately, the student is scared and confused and does not look at the smartphone's screen despite the insistent beeping.

The tour leader decides that the search for the missing student must be escalated. The tour group comprises a few adult chaperones with smartphones. They have already installed chaperone apps in their smartphones; these apps are controlled by the tour-leader app through WiFi connections. The tour leader directs the tour-leader app to escalate the search, and the tour-leader app instructs the chaperone apps to configure their smartphones as WiFi hotspots with the same ID and password as the tour leader hotspot. After that, the chaperones fan out through the museum, looking for the missing student.

Pretty soon, the missing student's smartphone picks up a WiFi signal from one of the chaperones' smartphones, which is now operating as if it were the tour leader's hotspot. The chaperone app in the chaperone's smartphone immediately connects with the tour-participant app in the lost student's smartphone, and the two apps exchange location information. The chaperone follows the directions provided on his/her smartphone screen and quickly locates the lost student.

The foregoing scenario is only a simplified example of how one embodiment of the present invention might be used. Other embodiments offer enhanced capabilities. For example, typical smartphones can also be used as mobile telephones and can also connect to the internet. In the scenario outlined above, the tour-leader app could continue communicating with the tour-participant app of the lost student through the internet, even after the WiFi signal is lost. Such connection might be used, for example, to communicate location information. Also, the tour leader might decide to communicate with the lost student through a telephone call or through text messaging.

Other embodiments of the present invention might also take advantage of a Central Command Center for coordinating the activities of the tour leader, chaperones, and students. A central Command Center is especially useful if a search for a lost tour participant needs to be escalated to the point of involving police or other such authorities. These and other possible embodiments of the present invention are presented in greater detail below.

### Brief Description of the Drawings

**Figure 1** depicts a tour group without chaperones in accordance with the prior art.
**Figure 2** depicts a tour group with chaperones in accordance with the prior art.
**Figure 3** depicts a tour group wherein the tour leader and the tour participants are all carrying smartphones, in accordance with an illustrative embodiment of the present invention.
**Figure 4** depicts some of the functionalities of a typical smartphone.
F**igure 5** depicts the structure of a wireless local-area network with interconnected smartphones in accordance with an illustrative embodiment of the present invention.
**Figure 6** depicts what happens when a tour participant strays from a tour group whose integrity is maintained through an illustrative embodiment of the present invention.
**Figure 7a** is a first flow diagram of a method for maintaining the integrity of a tour group in accordance with an illustrative embodiment of the present invention.
**Figure 7b** is a second flow diagram of a method for maintaining the integrity of a tour group in accordance with an illustrative embodiment of the present invention.
**Figure 8** depicts additional possible functionalities of a smartphone.
**Figure 9** depicts a system for maintaining the integrity of a tour group in accordance with some embodiments of the present invention.
**Figure 10** is a block diagram of a Central Command Center (CCC) in accordance with some embodiments of the present invention.

### Detailed Description

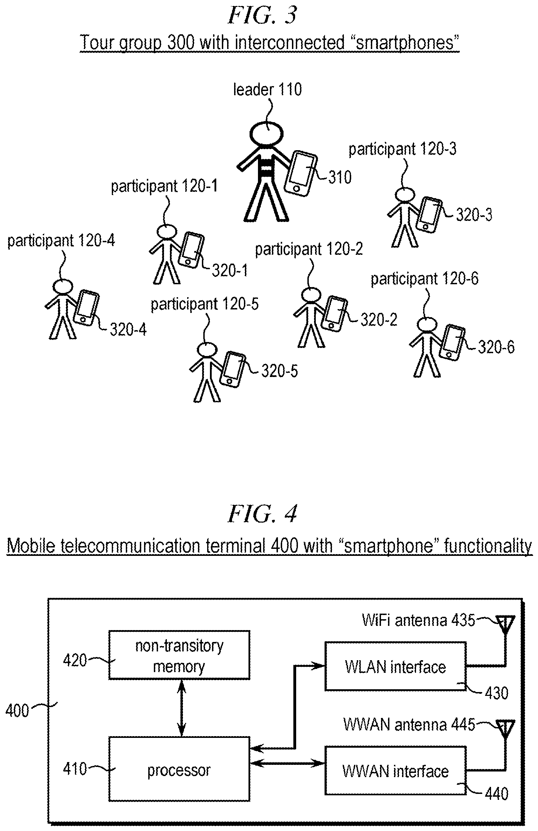

**Figure 3** depicts tour group 300 in accordance with a first illustrative embodiment of the present invention. Tour group 300 comprises a tour leader 110 and tour participants 120-1 through 120-6. Tour leader 110 is a person who has the responsibility of coordinating the activities of the tour group, including the responsibility of maintaining the integrity of the group. Tour participants 120-1 through 120-6 are people who rely on the tour leader for information and for deciding where to go. Maintaining the integrity of the group requires the tour leader to communicate to tour participants information regarding where they should and should not go at any given time.

Tour group 300 also comprises mobile telecommunication terminal 310, which is carried by tour leader 110, and mobile telecommunication terminals 320-1 through 320-6, which are carried by tour participants 120-1 through 120-6, respectively. In accordance with this first illustrative embodiment of the present invention, mobile telecommunication terminal 310 is a so-called "smartphone", and mobile telecommunication terminals 120-1 through 120-6 are also smartphones.

**Figure 4** depicts some of the functionalities of a typical smartphone. In particular, Figure 4 depicts mobile telecommunication terminal 400 which has functionalities utilized by the first illustrative embodiment of the present invention. The smartphones carried by tour leader 110 and tour participants 120-1 through 120-6 in the first illustrative embodiment of the present invention have these functionalities. In particular, mobile telecommunication terminal 400 comprises processor 410, non-transitory memory 420, WLAN interface 430 with WiFi antenna 435, and WWAN interface 440 with antenna 445, interconnected as shown. (The acronyms WLAN and WWAN stand for "wireless local-area network" and "wireless wide-area network," respectively. WiFi is the name of a widespread standard for implementing a WLAN).

WLAN interface 430, through WiFi antenna 435, can receive and transmit wireless signals that conform to the so-called WiFi standard. Similarly, WWAN interface 440, through WWAN antenna 445, can receive and transmit wireless signals that conform to one or more WWAN standards (also referred to as "cellular" standards) such as, for example, LTE, WiMax, UMTS, GSM, and CDMA2000.

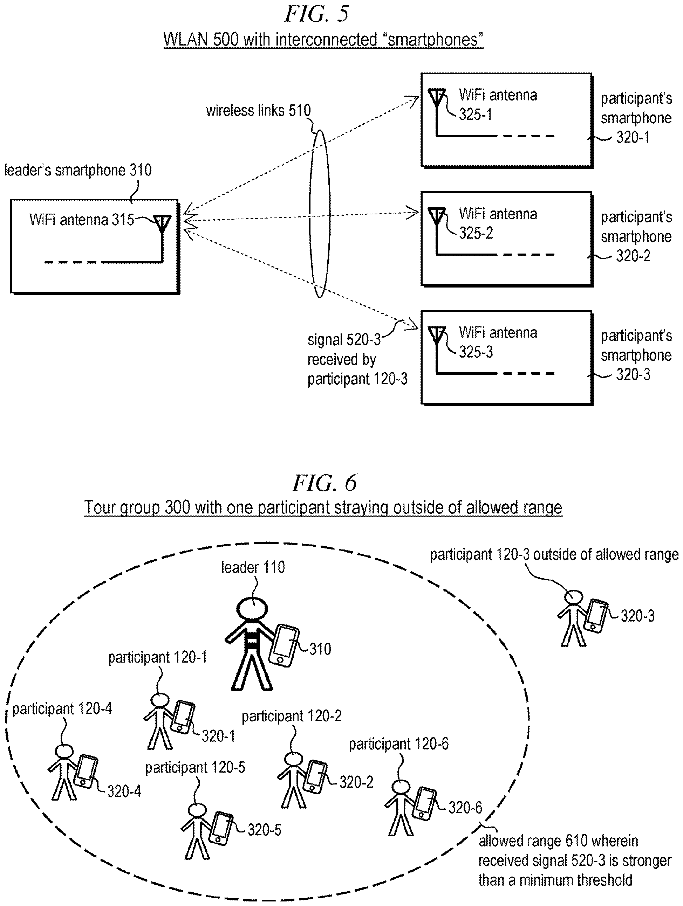

**Figure 5** depicts the structure of wireless local-area network 500 as implemented in accordance with the first illustrative embodiment of the present invention among the smartphones carried by tour group 300. In particular, mobile telecommunication terminal 310, which is the smartphone carried by the tour leader, is configured such that its WiFi interface functions as a so-called "WiFi hotspot"; and mobile telecommunication terminals 120-1 through 120-6, which are the smartphones carried by the tour participants, are configured such that their WiFi interfaces function as so-called "WiFi clients" that are connected with the hotspot. With such configurations, each of the WiFi tour participants' smartphone has a wireless link to the tour leader's smartphone. (For ease of depiction, Figure 5 shows only three of the participants' smartphones and associated wireless links.) Collectively, these wireless links, which are identified as wireless links 510 in Figure 5, form WLAN 500, as depicted in Figure 5.

Through the WLAN, the tour leader can send and receive information to/from each of the participants individually, or it can send information to a plurality of participants collectively, for example, in a so-called "broadcast" mode. Also, in accordance with this first illustrative embodiment of the present invention, the tour leader's smartphone continually transmits a WLAN signal that all tour participants' smartphones can receive. Each of the tour participants' smartphones monitors the strength of such received signal. It is well known in the art that the strength of a received wireless signal generally decreases as the distance covered by the associated wireless link increases. So, for example, if tour participant 120-3 begins to stray from the group, such that its distance from the tour leader progressively increases, the strength of the tour leader's WLAN signal, as received by that tour participant's smartphone 320-3, will progressively decrease.

**Figure 6** depicts what happens when a tour participant strays from the tour group. In particular, in Figure 6, tour participant 320-3 has moved to a location where his/her distance from the tour leader exceeds a maximum allowed range 610. The tour participant's smartphone has been loaded, prior to the beginning of the tour, with a set of instructions for monitoring the signal strength of the WLAN signal received from the tour leader's smartphone. Those instructions are stored in the non-transitory memory of the smartphone, and are executed by the smartphone's processor. For example, the instructions might be part of an app. Based on those instructions, the tour participant's smartphone compares the signal strength to a minimum threshold, and, if the signal strength becomes lower than the minimum threshold, the smartphone's processor reaches the conclusion that the tour participant has strayed from the group.

Although Figure 6 might be interpreted as suggesting that detection of a participant straying from the group is based on the distance between the participant and the tour leader, such detection is actually based on observation of a signal strength of the WLAN signal transmitted by the tour leader's smartphone, as received by the tour participant's smartphone. Received signal strength is known to depend on the distance traveled by the signal, but it also depends on other factors and, therefore, detection of a tour participant straying from the tour group might not occur at precisely the point where the tour participant goes beyond a particular distance threshold. However, in practice, a precise distance threshold is seldom necessary, and a minimum threshold on received signal strength is an adequate method for detecting when a tour participant strays from a tour group.

When such a straying is detected by the processor of the tour participant's smartphone, part of the instructions loaded in memory causes the processor to initiate a sequence of actions that are intended to make the tour participant rejoin the tour group. The processor continues effecting such actions until the tour participant moves to a location sufficiently close to the tour leader that the signal strength of the WLAN signal from the tour leader, as received by the tour participant's smartphone, is no longer lower than the minimum threshold. Upon such event, the processor might initiate a different set of actions, for example, to notify the tour leader that the straying of the tour participant has been corrected.

The value of the minimum threshold can be defined in a variety of ways. For example, it might be predefined and pre-loaded into the smartphone's non-transitory memory at the time when the set of instructions is loaded; or it might be downloaded to the tour participant's smartphone from the tour leader's smartphone and, possibly, continually updated, as instantaneous conditions warrant, during the course of the tour; or it might be loaded into the participant's smartphone from an internet server, such as, for example, a server that is part of a Central Command Center; or it might be adaptively computed and calibrated by software in the tour participant's smartphone acting either alone or in collaboration with, for example, software in the tour leader's smartphone, with such adaptive updating and calibration being based, for example, on the geographical positions of the tour leader's smartphone and the tour participant's smartphone. It will be clear to those skilled in the art, after reading this disclosure, how to define the minimum threshold for the signal strength based, for example, on a maximum distance from the tour leader that each tour participant must be within.

There is a wide variety of actions that might be initiated and effected by the processor in the tour participant's smartphone upon detecting that the tour participant has strayed from the group. The specific set of actions depends on the specific circumstances. For example, if the tour participant is a young child, and if the processor detects that the WLAN signal has totally disappeared, this might mean that the child is very far from the tour leader, and it might be appropriate to immediately initiate a search-and-rescue operation. On the other hand, if the tour participant is an adult, and the WLAN signal has become lower than the minimum threshold but is still fairly strong, a discreet auditory signal to encourage the tour participant to "hurry up" and keep up with the group might be all that's needed. It will be clear to those skilled in the art, after reading this disclosure, how to define a set of actions that is appropriate for a particular tour group.

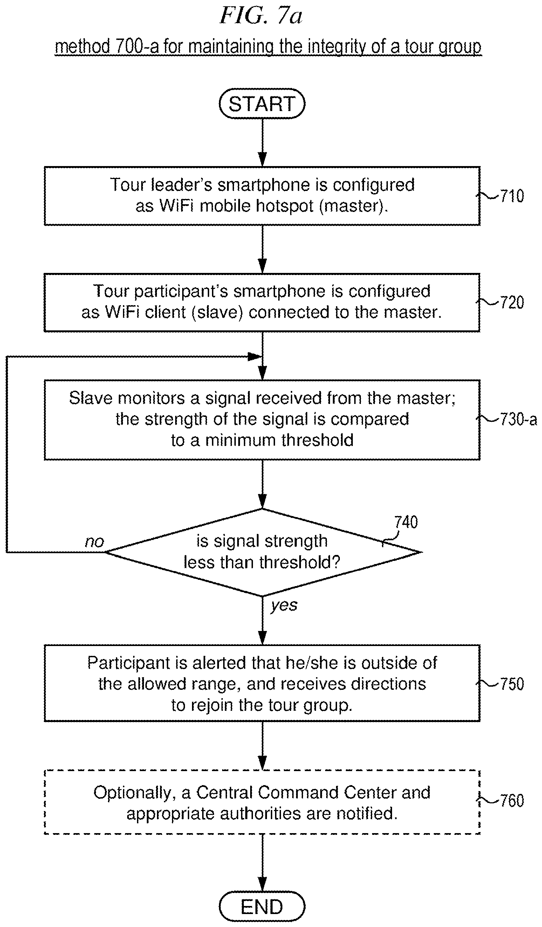

**Figure 7a** is a flow diagram of a method 700-a for maintaining the integrity of a tour group in accordance with an alternative illustrative embodiment of the present invention. Some aspects of the processes that are part of this method have been described in the previous paragraphs as part of the first illustrative embodiment of the present invention.

In accordance with process 710, the tour leader's mobile telecommunication terminal, referred to as a smartphone in process 710, is configured as a WiFi mobile hotspot. In the nomenclature of this specification, the functionality of the tour leader's smartphone thus configured is referred to as the WLAN master.

In accordance with process 720, the mobile telecommunication terminal (aka smartphone) of each tour participant is configured as a WiFi client in the WLAN defined by the tour leader's smartphone as WLAN master. In the nomenclature of this specification, the functionality of a tour participant's smartphone thus configured is referred to as a WLAN slave.

In accordance with process 730-a, each participant's smartphone (slave) monitors a signal transmitted on a continual basis by the tour leader's smartphone (master). For each slave, the signal strength of the signal, as received by the slave, is compared to a minimum threshold. Monitoring the signal comprises performing repeated measurements of the strength of the signal. Comparing signal strength to a minimum threshold might occur in the participant's smartphone, or it might occur elsewhere; for example, the participant's smartphone might transmit the value of the signal strength to the tour leader's smartphone, which could then perform the comparison. Alternatively, the participant's smartphone might transmit the value of the signal strength to a Central Command Center for the comparison to be performed there.

In accordance with process 740, if, as a result of the comparison, it is determined that the signal strength is not lower (less) than the minimum threshold, no particular action is taken, and the tour participant's smartphone continues to monitor the signal strength. If, instead, it is determined that the signal strength is lower than the minimum threshold, then process 750 is executed next.

Process 750 is executed when it is determined that, for a tour participant's smartphone, signal strength is lower than the minimum threshold. In accordance with process 750, the tour participant is alerted. As part of the alert, the tour participant is informed that he/she has strayed from the group, and the participant is also provided with appropriate directions for rejoining the group. Such directions might be accompanied by geographical information, for example, in the form of a map with arrows or other indications of a path to follow; the directions might also be accompanied by other types of assistance, as appropriate. Such directions, information and assistance for rejoining the group continue to be provided until the participant has rejoined the group.

The fact that the tour participant has rejoined the group is characterized by the fact that the signal strength of the signal received from the WLAN master, by the tour participant's smartphone, is no longer lower than the threshold. Thus, the intent of the directions, information, and assistance provided to the tour participant is, ultimately, to cause the tour participant to move to a location wherein the signal strength is no longer lower than the threshold.

Process 760 is optional and some embodiments of the present invention might comprise it while other embodiments might not. In accordance with process 760, when the signal strength is found to be lower than the minimum threshold, in addition to alerting the tour participant, other entities are notified of the occurrence. Such notifications might occur immediately, or they might occur at a later time or only if other conditions exist. For example, authorities that can initiate a search-and-rescue operation might be notified only if the tour participant does not rejoin the tour group within a predetermined length of time, or if attempts to talk to the tour participant via a cellular telephone call have failed.

Such notifications might be implemented through a Central Command Center which might issue such notifications automatically or via the interaction of a human operator. For example, notifications of parents of minor children, or initiation of search-and-rescue operations are probably best handled via human operators.

One of the authorities to be notified as part of process 760 might be the tour leader. Depending on the nature of the tour group, such notification might occur immediately, for example, if the tour participant is a minor; or it might occur only if additional conditions occur; for example, if the tour participant is an adult that is just lagging behind the rest of the group it might not be necessary to notify the tour leader at every such occurrence. Also, the "authority" being notified might not necessarily be a human person; for example, in most embodiments of the present invention, it is advantageous for the smartphone of the tour leader to be notified immediately every time a tour participant strays from the tour group. It is up to the processor in the tour leader's smartphone to decide, based on the instructions stored in the non-transitory memory, if it is necessary to alert the tour leader immediately, or, for example, after a delay, or only if some other event occurs, or only if certain conditions exist, or not at all. The instructions being executed by the processor in the tour leader's smartphone can be configured to make the appropriate decisions in this regard.

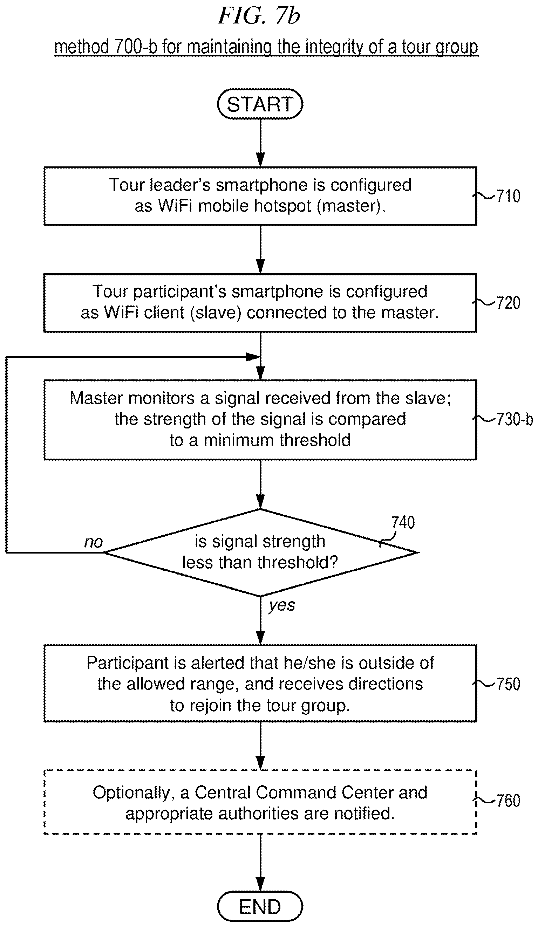

**Figure 7b** is a flow diagram of a method 700-b for maintaining the integrity of a tour group in accordance with an alternative illustrative embodiment of the present invention. Method 700-b is identical to method 700-a except for process 730-b which replaces process 730-a of method 700-a. In accordance with process 730-b, and in contrast with process 730-a, the status of the wireless link between a tour participant and the tour leader is monitored through a signal transmitted by the tour participant's smartphone (slave) and received by the tour leader's smartphone (master). Embodiments of the present invention in accordance with this method are advantageous when it is desired that the tour leader have direct information about the status of the wireless link. For example, if an accident occurs and the tour participant's smartphone is damaged, the loss of received signal at the tour leader's smartphone is an immediate indicator that something has happened. Also, comparing the received signal strength to a minimum threshold can be easily performed at the tour leader's smartphone. This is advantageous if the threshold is defined at the tour leader's smartphone because it obviates the need of distributing the minimum threshold to participants' smartphones.

It will be clear to those skilled in the art, after reading this disclosure, that method 700-a and method 700-b are not mutually exclusive. Embodiments of the present invention are possible wherein both the tour leader smartphone and the tour participant's smartphone transmit a WLAN signal to one another, and both smartphones monitor the respective received signal and compare received signal strength to a minimum threshold, which is not necessarily the same threshold for both signals. If either signal strength becomes lower than the threshold, either smartphone can initiate appropriate actions.

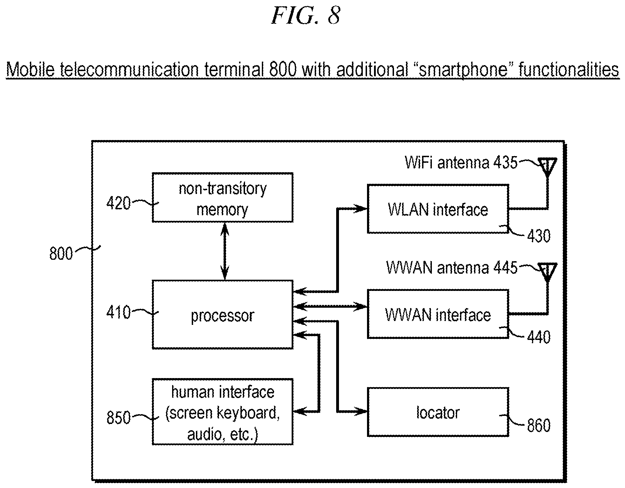

**Figure 8** depicts mobile telecommunication terminal 800 wherein additional functionalities, compared to mobile telecommunication terminal 400, are shown explicitly. The additional functionalities are commonly present in most smartphones and are likely to be present in the smartphones carried by the tour leader and by tour participants. The additional functionalities explicitly depicted in Figure 8 are: human interface 850 and locator 860.

Human interface 850 is a set of devices for interacting with the human user of mobile telecommunication terminal 800 (the smartphone). Such devices comprise, for example and without limitation: a display screen; a keyboard, which might be implemented through a touch-sensitive transparent surface affixed to the display screen in addition to actual pushbutton switches; a loudspeaker; a ringer, which might be the same as the loudspeaker; an earpiece; a microphone; a vibrator; indicator lights; a camera; an accelerometer. Additionally, most smartphones have an audio jack and a so-called "Bluetooth" interface which, though not human-interface devices in the strict sense, are frequently used to communicate or drive remote devices that are human interfaces, such as headphones and wireless headsets. For the purposes of this specification, such devices and others like them should be considered part of human interface 850.

Locator 860 is the geolocation capability of the smartphone. It might be implemented as actual hardware such as, for example, a GPS receiver, or it might be implemented through software in the smartphone that might work in cooperation with remote hardware or with software connected with the smartphone through a WWAN. Such locator smartphone software might run on a separate processor, or it might run on processor 410 and reside in non-transitory memory 420.

The additional smartphone functionalities depicted in Figure 8 can be utilized for implementing some of the features of the present invention described in the previous paragraphs. For example, alerting a tour participant or the tour leader might be accomplished by emitting a sound out of a smartphone's loudspeaker, or by making the smartphone vibrate, or by displaying a message on the screen, etc. The locator functionality is likely to be useful in assisting a tour participant for rejoining the tour group after straying away. For example, locator 860 might continually keep track of a tour participant's location, either at all times or starting when the tour participant strays from the group. A record of tour participant's locations through time might be stored in the smartphone's memory, or it might be transmitted to the tour leader's smartphone or to other entities such as a Central Command Center, where they might also be stored in memory. Such transmissions might occur through the WLAN or through a WWAN. The availability of such stored record of locations (colloquially referred to as "breadcrumbs") can be advantageous when assisting the tour participant for rejoining the group, or in search-and-rescue operations.

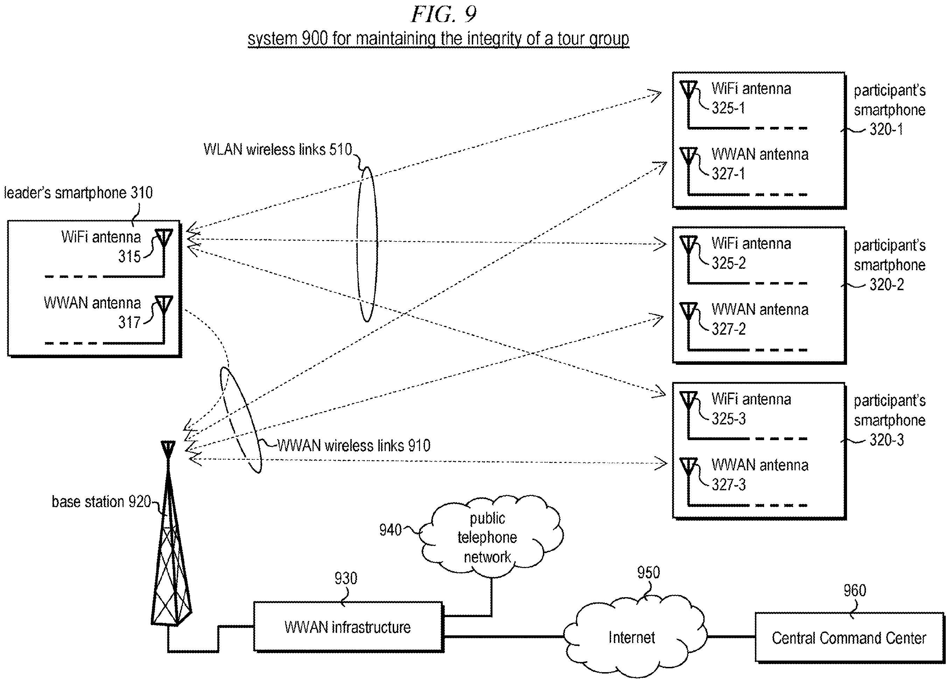

**Figure 9** depicts a system 900 for maintaining the integrity of a tour group in accordance with some embodiments of the present invention. Some of the elements depicted in Figure 9 have been described in the previous paragraphs. In particular, system 900 comprises mobile telecommunication terminal 310, which is the tour leader's smartphone, and mobile telecommunication terminals 320-1 through 320-3, which are the smartphones of three of the tour participants.

Each smartphone might comprise some or all of the elements depicted in Figure 8, as well as others that are not explicitly depicted. In particular, the participants' smartphones are connected to the tour leader's smartphone through the smartphones' WiFi antennas 315 and 325-1 through 325-3. Collectively, the wireless links between the WiFi antennas make up a WLAN. The WLAN wireless links are depicted in Figure 9 as dashed lines and identified as WLAN wireless links 510.

All the smartphones are also connected to a WWAN through their WWAN antennas 317 and 327-1 through 327-3. The WWAN wireless links are depicted in Figure 9 as dashed lines and identified as WWAN wireless links 910.

The WWAN is implemented by means of a plurality of base stations, commonly referred to as cellular base stations. Figure 9 depicts one such base station as base station 920. Base stations are interconnected with one another through an infrastructure depicted in Figure 9 as WWAN infrastructure 930. The infrastructure and the base station are provided by a WWAN service provider which provides interconnectivity between WWAN users, such that smartphones 310 and 320-1 through 320-3 can also communicate with one another through the WWAN, in addition to or instead of through the WLAN, as needed.

The WWAN infrastructure also provides a connection to the public telephone network, shown in Fig. 9 as public telephone network 940, such that the tour leader and the tour participants can make and receive telephone calls on their smartphones to/from anyone in the world, as well as, of course, to/from one another. The WWAN infrastructure also provides a connection to the Internet, shown in Fig. 9 as Internet 950, such that all the smartphones can also exchange digital data with any device that is connected to the Internet. In particular, the tour operator provides Central Command Center 960 (CCC) that can communicate, through the Internet and through the WWAN, with the smartphone of the tour leader and with the smartphones of the tour participants.

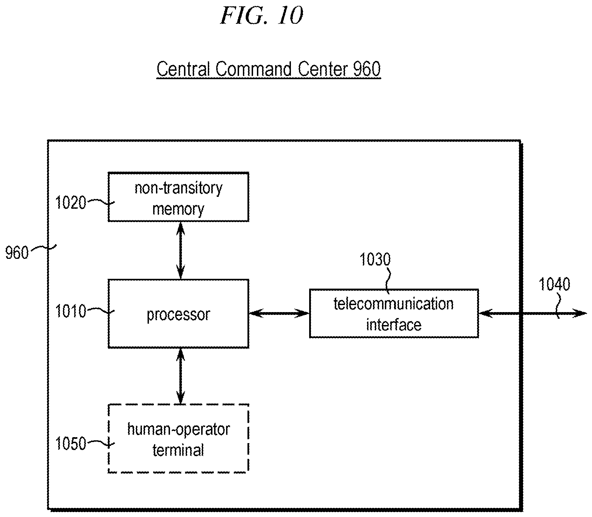

**Figure 10** is a block diagram of Central Command Center 960 in accordance with some embodiments of the present invention. Central Command Center 960 comprises processor 1010 and non-transitory memory 1020. Processor 1010 is for executing instructions that are stored in non-transitory memory 1020. Central Command Center 950 also comprises telecommunication interface 1030 which is connected to communication link 1040.

Communication link 1040 is typically connected to the Internet and, through the Internet and a WWAN, it enables Central Command Center 960 to communicate with the smartphones of a tour leader and tour participants. It will be clear to those skilled in the art, after reading this disclosure, that other means of connecting Central Command Center 960 are also possible. For example, Central Command Center 960 might be directly connected to WWAN infrastructure 1030 without going through the Internet.

In many embodiments of the present invention, Central Command Center 960 assists the smartphones of a tour leader and tour participants in maintaining the integrity of their tour group. Additional details about the functionality of a Central Command Center in accordance with the present invention are provided below.

Although the WLAN that interconnects smartphones is based on the WiFi standard in most of the illustrative embodiments presented above, it will be clear to those skilled in the art, after reading this disclosure, how to make and use embodiments of the present invention wherein other wireless standards are used to implement a WLAN. For example, and without limitation, a WLAN might be based on the so-called "Bluetooth" standard, or on the so-called "Zigbee" standard or on any of many standards that exist now or might exist in the future, or on a non-standard, public or proprietary specification or set of specifications as is well known in the art.

It will be clear to those skilled in the art, after reading this disclosure, that the notification in process 760 can be conveyed through a variety of channels. If WLAN connectivity is available, the WLAN wireless link can be used, for example, for the tour participant's smartphone to notify the tour leader's smartphone; thereafter, other authorities can be notified by either the tour leader's smartphone, or by the tour participant's smartphone, or by both. If WLAN connectivity is not available, but WWAN connectivity is available, the tour participant's smartphone can, for example, notify the tour leader's smartphone through the WWAN. For example, the tour participant's smartphone might use the Internet to send a message to the tour leader's smartphone. Alternatively, the tour participant's smartphone might send a so-called "SMS text message" or other type of message to the tour leader's smartphone. Such messages do not require Internet connectivity. Alternatively, communications between smartphones might be accomplished, for example, through the Central Control Center, which might relay messages between smartphones with or without additional processing, editing or otherwise modifying, reducing or augmenting the contents of the messages. The Central Command Center might also be used as a relay station for other notifications to other authorities or for receiving information from such authorities or other entities.

The task of process 750 is to cause the tour participant to move to a location where the signal strength is not lower than the threshold. It should be understood that such a result is to be considered accomplished when the tour participant is in such a location, even if a signal is not explicitly detected and observed to have the desired signal strength at that location. For example, if the battery of a tour participant's smartphone becomes discharged, the smartphone will, of course, become unable to transmit a signal. If the tour leader's smartphone was monitoring such a signal, it will detect that the signal strength has become lower than the minimum threshold, and might, for example, alert the tour leader. The tour leader might then ascertain that the reason for the alert was just a dead battery, and then the tour leader might reconfigure his/her smartphone to no longer monitor the signal from that tour participant's (now dead) smartphone. The latter action is equivalent to setting the minimum threshold for that tour participant's smartphone to a value of zero, such that a missing signal, which has a signal strength of zero, is no longer lower than the minimum threshold. In this example, the action taken by the tour leader has resulted in the tour participant "moving" from a location where its signal strength, as received by the tour leader's smartphone, was lower than the minimum threshold to a location where the signal strength is no longer lower than the minimum threshold simply because the value of the minimum threshold has changed, even if the "moving" did not involve an actual physical motion in the geometric sense.

There are many reasons why the minimum threshold for the signal strength of a signal might be modified in embodiments of the present invention. If such a modification results in a signal strength becoming lower than the minimum threshold, or, vice versa, it results in a signal strength no longer being lower than the minimum threshold, such changes should be regarded, for the purposes of this specification, as equivalent to changes that are due to the signal strength actually changing, regardless of the associated underlying causes.

In process 750, the task of causing the tour participant to move to a location where the tour participant is regarded as having rejoined the group can be accomplished in a wide variety of ways. For example, and without limitation, a simple scenario is one whereby a message is conveyed to the tour participant with a request to move closer to the tour leader, and the task is completed when the tour participant moves closer to the tour leader such that the signal strength is no longer lower than the threshold. A more extreme scenario is one whereby a search-and-rescue operation is initiated that results in the tour participant being found, for example, as a victim of an accident with a damaged smartphone, and the tour participant might be reunited with the tour leader in a hospital room. For the purposes of this specification, even the more extreme scenario should be regarded as achieving the objective of process 750, even though the participant's smartphone has been damaged and is, therefore, unable to detect a signal from the tour leader's smartphone, should a reunion occur in a hospital room. Once the tour participant has been found by rescuers and brought back to a controlled location, it is potentially possible for the tour leader and the tour participant to be close enough to one another such that an adequate signal strength would be detected if the wireless link were re-established.

Although embodiments of the present invention have been described wherein there is only one tour leader, it will be clear to those skilled in the art, after reading this disclosure, how to make and use embodiments of the present invention wherein there are multiple tour leaders. For example, and without limitation, there might be different tour leaders at different times, or there might be two or more tour leaders whose smartphones are both configured as master of a WLAN at the same time. In such a situation, tour participants' smartphones might, for example, monitor the signal strength of only one tour leader at a time, based on instructions from one of the tour leaders as to whose signal to monitor. Alternatively, tour participants' smartphones might monitor multiple signals from multiple tour leaders at the same time, and take action if any one of them becomes lower than a minimum threshold, possibly with different thresholds for different signals. It will be clear to those skilled in the art, after reading this disclosure, how to implement embodiments of the present invention with these and other combinations of multiple tour leaders.

The terms "tour leader" and "tour participant" have been used in this specification solely for ease of explanation and should not be construed as implying that the "tour leader" is necessarily a person that has a leadership position within the tour group, and that the tour participants have a subordinate position. For example, and without limitation, in some embodiments of the present invention, chaperones might carry smartphones configured to perform the functionalities of a tour leader's smartphone. It will be clear to those skilled in the art, after reading this disclosure, how to make and use embodiments of the present invention wherein, for example, "tour leaders" are simply individuals whose smartphones are used for defining the geographical area where certain other individuals that are the "tour participants" are allowed to be.

Although embodiments of the present invention have been described with extensive use of the word "smartphone", it will be clear to those skilled in the art, after reading this disclosure, that a variety of mobile telecommunication terminals can be used, as long as they have the necessary functionalities. Indeed many so-called laptop or portable computers, and many so-called tablet or pad portable computers have the functionalities depicted in Figures 4 and 8, or are otherwise suitable for implementing some embodiments of the present invention. Also, in some embodiments of the present invention, a WWAN interface is not required for some or, possibly, for any of the mobile telecommunication terminals carried by the tour leader and/or the tour participants. In such embodiments, the "smartphones" can be substituted with simpler mobile telecommunication terminals that have the functionalities required by those embodiments but not necessarily the full set of smartphone functionalities. For example, tablets or laptops that have a WiFi interface but not a WWAN interface might be effective in those embodiments.

Although embodiments of the present invention have been described as applied to tour groups, which are groups of people that practice tourism, it will be clear to those skilled in the art, after reading this disclosure, how to make and use embodiments of the present invention that are applicable to other groups of people. For example, and without limitations, a group of visitors to an industrial facility, or a group of researchers on a field trip, or a group of explorers in unfamiliar territory might benefit from an embodiment of the present invention. It will be clear to those skilled in the art, after reading this disclosure, how to identify applications of the present invention that are equivalent to the ones presented in this specification. For the purposes of this specification, "tour", "tour leader", "tour participant", and other such terms should be understood to be applicable to such equivalent applications.

It is to be understood that this disclosure teaches just one or more examples of one or more illustrative embodiments, and that many variations of the invention can easily be devised by those skilled in the art after reading this disclosure, and that the scope of the present invention is defined by the claims accompanying this disclosure.

### Markman Definitions

**Central command center (CCC) -** For the purposes of this specification, a "**Central command center**" is defined as a collection of devices for implementing the functionalities described in this specification that are to be performed by a CCC, together with the premises wherein such collection of devices is located. A CCC comprises at least one data-processing system that is connected to a communication network with wide-area reach such as, for example, the Internet; wherein the data-processing system comprises at least one processor and at least one computer-readable non-transitory medium containing instructions suitable for processor execution. The instructions are for implementing or supporting various functionalities related to the activities of a tour group. For example, and without limitation, such functionalities might comprise:
i. collecting information from the tour leader such as, for example the geographical location of the tour group, or
ii. collecting information from a tour participant such as, for example, the geographical location of the tour participant, or
iii. communicating tour-participant location and status information to the tour leader, or
iv. communicating tour-leader location and status information to tour participants, or
v. receiving information from the tour leader or from a tour participant that the tour participant is outside the allowed range, or
vi. formulating a path for a tour participant that is outside of the allowed range, and communicating the path to the tour participant, or
vii. alerting the appropriate authorities as needed, or
viii. providing information to authorized entities (e.g., relatives, tour organizers, etc), or
ix. a combination of i, ii, iii, iv, v, vi, vii, or viii.

A CCC might comprise one or more telecommunication terminals for interaction with a human operator. Such one or more terminal might be installed within a workstation that comprises, for example, a desk, a chair and other paraphernalia for facilitating operator activities. For example, a workstation might comprise a telephone and/or other telecommunication equipment for enabling the operator to communicate with tour leaders, tour participants, or other individuals. For the purposes of this specification, such workstations and associated paraphernalia should be considered to be part of the CCC. Human operators might assist in or perform the functionalities to be implemented by the CCC, such as, for example, fuctionalities i thorugh ix above, or other functionalities.

Some embodiments of the present invention might comprise more than one CCC. Also, some embodiments of the present invention might comprise a CCC that does not comprise terminals for human operators. In such a CCC, all functionalities are implemented by one or more data-processing system.

To **Determine -** In this specification, the verb "**to determine**" and its inflected forms (e.g., "determining", etc.) is used as an intransitive verb as in, "determining that ...". For the purposes of this specification "to **determine** that ..." is defined as "to reach the conclusion that ...". Therefore, for example, "determining that something has occurred" means "to reach the conclusion that something has occurred".

To **Generate -** For the purposes of this specification, the verb "**to generate**" and its inflected forms (e.g., "generating", "generation", etc.) should be given the ordinary and customary meaning that the terms would have to a person of ordinary skill in the art at the time of the invention.

**Geolocation -** For the purposes of this specification, "geolocation" is defined as the identification of the geographical location of an object. A device that has a "geolocation capability" is defined as a device whose geographical location can be estimated. This might happen through an autonomous capability of the device; for example, the device might comprise a so-called GPS receiver, which can estimate its own latitude and longitude by listening to signals from the so-called GPS satellite constellation. Alternatively, a geolocation capability might be achieved through interaction between the device and an external infrastructure such as a WWAN infrastructure, in which case the location of the device might be estimated by the device itself, by the infrastructure, or by both, either individually or in collaboration. In some cases, a geolocation capability might be entirely based on the capabilities of a WWAN; for example, the WWAN might estimate the geographical location of the device by examining the wireless signal transmitted by the device, or by examining information provided by the device as part of its interaction with the WWAN. In any case, a device which has estimated its own location can communicate it to the WWAN, or, vice versa, a WWAN that has estimated a device's location can communicate it to the device.

**Geographical location -** For the purposes of this specification, a "**geographical location**" is defined as a place on Earth. A geographical location is most accurately described by means of a latitude and a longitude on the surface of the Earth; elevation above sea level or above the average terrain might also be included. However, it is generally more convenient, for human use, to express a geographical location as a description that is more easily usable by a person, such as, for example, an address, or a street corner, or the identification of a landmark or building.

**Master -** See Wireless Local-Area Network.

**Path** *-The American Heritage Dictionary*, third edition, provides several definitions for the noun "**path**". One of them is: "The route or course along which something travels or moves". For the purposes of this specification, this definition is somewhat extended to also include a representation of an actual physical path. For example, some embodiments of the present invention transmit a message that contains a path that a tour participant is asked to follow. Such a path might be conveyed, for example, in the form of a map, or in the form of a set of directions readable and understandable by a human. If the tour participant follows the map or follows the directions, this will result in the tour participant moving along the actual physical path represented by the map or by the directions.

**Processor -** For the purposes of this specification, a "**processor**" is defined as hardware or hardware and software that perform mathematical and/or logical operations. Typically, such mathematical and/or logical operations are performed as defined by a set of instructions. Such instructions might be stored in some form of memory, or they might be encoded in hardware as interconnections between hardware elements; in the first case, it is common to refer to such instructions as "software" even if they are stored in non-transitory memory; the second case might be implemented, for example, as a gate array, in which case the gate array might also act as the processor. The processor described in the illustrative embodiments might have more limitations than a processor in the claims.

**Signal strength -** The expression "signal strength" is used in this specification to refer to the strength of a signal. In this definition, the word "strength" refers to any quantitative parameter of the signal that characterizes the signal's quality; i.e., its suitability for its intended purpose such that a larger value of the parameter indicates a greater suitability. This definition is broader than the dictionary definition of the word "strength" which, when used in reference to wireless signals, generally means only the power of the signal. Signal parameters, other than power, that are in accordance with this definition comprise, for example and without limitation: (i) Signal-to-noise ratio (SNR); (ii) Signal-to-interference ratio (SIR); (iii) Signal-to-distortion ratio (SDR); (iv) Bit-error rate and its variants, such as symbol-error rate and pseudo-error rate; (v) any other parameter that characterizes a measure of signal quality. Any one of parameters (i) through (v) can be compared to a threshold and, if it is exceeds the threshold, the signal is of better quality than if it does not exceed the threshold.

In a Wireless local-area network, the strength of a signal, as defined here, generally decreases as the distance traveled by the signal increases. As such, signal strength can be used as an approximate measure of the length of a wireless link. It will be clear to those skilled in the art, after reading this disclosure, how to use signal parameters, such as those mentioned in the previous paragraph and others that conform to this definition, in embodiments of the present invention for the purpose of obtaining an approximate measure of the length of a wireless link.

**Signal -** The word "signal," has a broad meaning in a wide variety of fields; however, for the purposes of this specification the word "signal" is only used to refer to a wireless signal. In many implementations of wireless communications, wireless signals are radio signals (i.e., signals that propagate as electromagnetic waves) but other wireless signals such as, for example, optical (light) signals and sound signals are known and used in some implementations of wireless communications. Many embodiments of the present inventions are based on wireless radio signals, but embodiments that are based on other types of wireless signals are also possible. The expression "WLAN signal" is used in this specification to refer to a wireless signal that is used in a wireless local-area network to implement one of the wireless links that are part of the wireless local-area network.

**Slave -** See Wireless Local-Area Network.

**Threshold -** For the purposes of this specification, the word "threshold" is defined as a particular possible value of a signal strength against which the strength of an actual signal is compared. In embodiments of the present invention, a signal strength is compared to a minimum threshold; if it is found to be lower (less) than the threshold, corrective action is taken.

It will be understood by those skilled in the art, after reading this disclosure, that comparing a signal strength to a minimum threshold can be, equivalently, implemented by comparing another signal parameter to a maximum threshold. For example, the inverse of the signal strength can be compared to a maximum threshold. Comparing the inverse of the signal strength to a maximum threshold is identical to comparing the signal strength to a minimum threshold. It will be clear to those skilled in the art, after reading this disclosure, how to make and use embodiments of the present invention which comprise a threshold comparison that is equivalent to comparing a signal strength to a minimum threshold.

It will also be clear to those skilled in the art, after reading this disclosure, how to make and use embodiments of the present invention wherein the comparison of a signal strength to a minimum threshold is accomplished without effecting an actual numerical comparison. For example, and without limitation, a wireless link typically requires a minimum signal strength to achieve connectivity. Embodiments of the present invention are possible wherein loss or absence of connectivity is utilized to indicate that signal strength is lower than a minimum threshold. In such embodiments, observing the presence or absence of connectivity is equivalent to comparing the signal strength to the minimum threshold required for such connectivity. Total absence of a signal can also be interpreted as signal strength being lower than a threshold.

For many types of wireless links, different signal strengths are required for different functionalities. For example, a particular signal strength might be required for establishing connectivity, while a different signal strength might be required for maintaining connectivity after it's established. Also, a wireless link that supports multiple communication modes (for example, to enable different bit rates under different conditions) typically requires different levels of signal strength for different modes. If a wireless link becomes unable to support a particular mode, it means that the signal strength has become lower that the minimum threshold for such mode. Embodiments of the present invention can monitor the ability of a wireless link to support a particular mode or functionality as a way of detecting when the signal strength becomes lower than a minimum threshold.

**When -** For the purposes of this specification, the word "when" is defined as "upon the occasion of."

**Wireless Local-Area Network (WLAN)** - For the purposes of this specification, a "**wireless local-area network**" is defined as a wireless network that comprises a plurality of wireless nodes wherein one node communicates wirelessly via direct digital radio links with all the other nodes. For the purposes of this specification, such a node is designated as the "master" of the WLAN. In a WLAN in accordance with this definition, there is only one master at any given time (although different nodes might be the master at different times).

For the purposes of this specification, nodes that are not the master are designated as "slaves", and slaves communicate directly only with the master (but might communicate with one another through the master).

A WLAN in accordance with this definition can be based, for example, on the so-called "WiFi" standard. In WiFi terminology, an "access point" is a device that communicates with a plurality of wireless "clients". A common colloquial term for "WiFi access point" is "WiFi hotspot". Clients communicate directly with the access point (and might communicate with one another through the access point). An access point can perform the function of the WLAN master, and clients can perform the function of slaves. Other modes of operation of a WiFi network can also be used to create a WLAN in accordance with this definition. For example, the WiFi standard also allows a so-called peer-to-peer mode of operation. Such a mode might, possibly, be used to implement links between the master and the individual clients, to achieve a WLAN that is operated in accordance with this definition.

Until recently, a WiFi access point has often been a fixed device that might be interconnected with a wired network; however, mobile access points (also known as mobile hot spots) have now become common. They are, typically, portable devices that can connect to the internet via, for example, a cellular wireless connection to a cellular service provider. Such a mobile access point can provide clients with internet connectivity by routing wireless data packets between the WiFi links and the cellular connection to the internet. For the purposes of this specification, such connection to the internet is not part of the definition of a WLAN. Such a connection might or might not be present. A WLAN in accordance with this definition can be realized, for example, with a mobile access point that is not connected to the internet, and at least one mobile client connected to the access point via a WiFi wireless link.

The WiFi standard is not the only standard that can be used for implementing a WLAN in accordance with this definition. For example, the so-called "Bluetooth" standard might also be suitable. In Bluetooth terminology, the term "master" is used to designate a device with a functionality similar to the functionality of the master in this WLAN definition; and the term "slave," is also used, in Bluetooth terminology, to describe a functionality similar to the functionality of the slave in this WLAN definition. The so-called "Zigbee" standard might also be suitable; for example, a Zigbee "coordinator" might be used as a WLAN master, and a Zigbee "end device" might be used as a WLAN slave. Other possible implementations of a WLAN in accordance with this definition will be readily identifiable by those skilled in the art, after reading this disclosure.

This definition of a WLAN does not exclude the possibility that a device that comprises a WLAN node (master or slave) might also comprise other functionalities. Such other functionalities might, for example, provide alternative communication capabilities. For example, a mobile telecommunication terminal of the type commonly referred to as "smartphone" typically comprises a WiFi interface as well as a WWAN interface. The WiFi interface might be configured as a node in a WLAN in accordance with this definition, and the WWAN interface might be used for connecting to the Internet. The Internet connection can be then used to implement an alternative communication capability between two mobile telecommunication terminals in addition to the communication capability that the two terminals have with one another through the WLAN. Such an alternative communication capability is an important part of some embodiments of the present invention.

**Wireless Wide-Area Network (WWAN) -** For the purposes of this specification, a "**wireless wide-area network**" is defined as a wireless communication network that supports a plurality of mobile telecommunication terminals through wireless links wherein each wireless link is between a mobile telecommunication terminal and a fixed network infrastructure, and wherein the infrastructure enables the mobile telecommunication terminals to connect to the Public Telephone network, or to the Internet, or both.

A wireless wide area network is typically based on a cellular network technology; because of this, wireless wide area networks are colloquially called "cellular" networks, and terminals are often called "cellular" phones. Several cellular technologies exist; they are known in the art with names such as LTE, WiMAX, UMTS, CDMA2000, and GSM, to name a few. Such technologies can be offered regionally, nationwide, or even globally and are typically provided by a wireless service provider which builds, supports and maintains the fixed infrastructure. Owners of mobile telecommunication terminals generally must pay fees to a service provider in return for access to a WWAN; such fees can be "per use" or on a subscription basis.

## Claims

1. A method for maintaining the integrity of a tour group, the method comprising:
(i) configuring a first mobile telecommunication terminal as master of a wireless local-area network (WLAN), wherein the first mobile telecommunication terminal is carried by a tour leader;
(ii) configuring a second mobile telecommunication terminal as a slave of the WLAN, wherein the second mobile telecommunication terminal is carried by a tour participant;
(iii) monitoring, at the second mobile telecommunication terminal, a signal strength of a WLAN signal transmitted by the WLAN master;
(iv) defining a minimum threshold for the signal strength;
(v) comparing the signal strength to the threshold; and
(vi) in the event of the signal strength becoming lower than the threshold, causing the second mobile telecommunication terminal to move to a location wherein the signal strength is no longer lower than the threshold.

2. A method for maintaining the integrity of a tour group, the method comprising:
(i) configuring a first mobile telecommunication terminal as master of a wireless local-area network (WLAN), wherein the first mobile telecommunication terminal is carried by a tour leader;
(ii) configuring a second mobile telecommunication terminal as a slave of the WLAN, wherein the second mobile telecommunication terminal is carried by a tour participant;
(iii) monitoring, at the first mobile telecommunication terminal, a signal strength of a WLAN signal transmitted by the slave;
(iv) defining a minimum threshold for the signal strength;
(v) comparing the signal strength to the threshold; and
(vi) in the event of the signal strength becoming lower than the threshold, causing the second mobile telecommunication terminal to move to a location where the signal strength is no longer lower than the threshold.

3. The method of claim 1 or of claim 2 wherein (vi) causing the second mobile telecommunication terminal to move comprises:
(vi-1) generating, by the second mobile telecommunication terminal, an alert detectable by the tour participant.

4. The method of any one of claims 1 through 3 wherein (vi) causing the second mobile telecommunication terminal to move comprises:
(vi-2) activating, at the second mobile telecommunication terminal, a geolocation capability for recording the geographical location of the second mobile telecommunication terminal;
(vi-3) communicating, to a central command center (CCC), information about the second mobile telecommunication terminal, wherein the communicating occurs through a wireless wide-area network (WWAN).

5. The method of claim 4 wherein the information about the second mobile telecommunication terminal is communicated to the CCC by the first mobile telecommunication terminal through the WWAN.

6. The method of claim 4 wherein the information about the second mobile telecommunication terminal is communicated to the CCC by the second mobile telecommunication terminal through the WWAN.

7. The method of any one of claims 1 through 6 further comprising:
(vii) in the event of the signal strength becoming lower than the threshold, communicating information about the event through a wireless wide-area network (WWAN), wherein the communicating occurs between the first mobile telecommunication terminal and the second mobile telecommunication terminal.

8. The method of any one of claims 1 through 7 further comprising:
(viii) communicating, through a wireless wide-area network (WWAN), the geographical location of the first mobile telecommunication terminal to a central command center (CCC).

9. The method of any one of claims 1 through 8 further comprising:
(ix) communicating, through a wireless wide-area network (WWAN), the geographical location of the second mobile telecommunication terminal to a central command center (CCC).

10. The method of any one of claims 1 through 9 wherein:
(iv) defining a minimum threshold for the signal strength comprises communicating the threshold to the second mobile telecommunication terminal.

11. The method of any one of claims 1 through 10 wherein:
(v) comparing the signal strength to the threshold comprises communicating the signal strength to the first mobile telecommunication terminal.

12. The method of any one of claims 1 through 11 further comprising:
(x) transmitting, by the first mobile telecommunication terminal, through the WLAN, instructions for executing at least part of one or more of (ii), (iii), (iv), (v), (vi), (vii), (viii) and (ix), wherein execution of the instructions is by means of a digital processor; and
(xi) receiving, by the second mobile telecommunication terminal, the instructions.

## Patentansprüche

1. Verfahren zur Aufrechterhaltung der Integrität einer Reisegruppe, wobei das Verfahren umfasst:
(i) Konfigurieren eines ersten Mobilfunkendgeräts als Master eines drahtlosen lokalen Netzwerks (WLAN), wobei das erste Mobilfunkendgerät von einem Reiseleiter getragen wird,
(ii) Konfigurieren eines zweiten Mobilfunkendgeräts als Slave des WLANs, wobei das zweite Mobilfunkendgerät von einem Reiseteilnehmer getragen wird,
(iii) Überwachen, an dem zweiten Mobilfunkendgerät, einer Signalstärke eines von dem WLAN-Master gesendeten WLAN-Signals,
(iv) Definieren eines minimalen Schwellwerts für die Signalstärke,
(v) Vergleichen der Signalstärke mit dem Schwellwert und
(vi) für den Fall, dass die Signalstärke niedriger wird als der Schwellwert, Bewirken, dass sich das zweite Mobilfunkendgerät an eine Stelle bewegt, an der die Signalstärke nicht mehr niedriger als der Schwellwert ist.

2. Verfahren zur Aufrechterhaltung der Integrität einer Reisegruppe, wobei das Verfahren umfasst:
(i) Konfigurieren eines ersten Mobilfunkendgeräts als Master eines drahtlosen lokalen Netzwerks (WLAN), wobei das erste Mobilfunkendgerät von einem Reiseleiter getragen wird,
(ii) Konfigurieren eines zweiten Mobilfunkendgeräts als Slave des WLANs, wobei das zweite Mobilfunkendgerät von einem Reiseteilnehmer getragen wird,
(iii) Überwachen, an dem ersten Mobilfunkendgerät, einer Signalstärke eines von dem Slave gesendeten WLAN-Signals,
(iv) Definieren eines minimalen Schwellwerts für die Signalstärke,
(v) Vergleichen der Signalstärke mit dem Schwellwert und
(vi) für den Fall, dass die Signalstärke niedriger wird als der Schwellwert, Bewirken, dass sich das zweite Mobilfunkendgerät an eine Stelle bewegt, an der die Signalstärke nicht mehr niedriger als der Schwellwert ist.

3. Verfahren nach Anspruch 1 oder Anspruch 2, wobei das (vi) Bewirken, dass sich das zweite Mobilfunkendgerät bewegt, umfasst:
(vi-1) Erzeugen einer vom Reiseteilnehmer wahrnehmbaren Warnung durch das zweite Mobilfunkendgerät.

4. Verfahren nach einem der Ansprüche 1 bis 3, wobei das (vi) Bewirken, dass sich das zweite Mobilfunkendgerät bewegt, umfasst:
(vi-2) Aktivieren, an dem zweiten Mobilfunkendgerät, einer Geopositionsbestimmungsfähigkeit zur Aufzeichnung der geographischen Position des zweiten Mobilfunkendgeräts,
(vi-3) Übermitteln, an eine zentrale Einsatzzentrale (CCC), von Informationen über das zweite Mobilfunkendgerät, wobei die Übermittlung über ein drahtloses Weitverkehrsnetz (WWAN) erfolgt.

5. Verfahren nach Anspruch 4, wobei die Informationen über das zweite Mobilfunkendgerät an die CCC über das WWAN durch das erste Mobilfunkendgerät übermittelt werden.

6. Verfahren nach Anspruch 4, wobei die Informationen über das zweite Mobilfunkendgerät an die CCC über das WWAN durch das zweite Mobilfunkendgerät übermittelt werden.

7. Verfahren nach einem der Ansprüche 1 bis 6, ferner umfassend:
(vii) für den Fall, dass die Signalstärke niedriger wird als der Schwellwert, Übermitteln von Informationen über das Ereignis über ein drahtloses Weitverkehrsnetz (WWAN), wobei die Übermittlung zwischen dem ersten Mobilfunkendgerät und dem zweiten Mobilfunkendgerät erfolgt.

8. Verfahren nach einem der Ansprüche 1 bis 7, ferner umfassend:
(viii) Übermitteln der geographischen Position des ersten Mobilfunkendgeräts an eine zentrale Einsatzzentrale (CCC) über ein drahtloses Weitverkehrsnetz (WWAN).

9. Verfahren nach einem der Ansprüche 1 bis 8, ferner umfassend:
(ix) Übermitteln der geographischen Position des zweiten Mobilfunkendgeräts an eine zentrale Einsatzzentrale (CCC) über ein drahtloses Weitverkehrsnetz (WWAN).

10. Verfahren nach einem der Ansprüche 1 bis 9, wobei:
(iv) das Definieren eines minimalen Schwellwerts für die Signalstärke das Übermitteln des Schwellwerts an das zweite Mobilfunkendgerät umfasst.

11. Verfahren nach einem der Ansprüche 1 bis 10, wobei:
(v) das Vergleichen der Signalstärke mit dem Schwellwert das Übermitteln der Signalstärke an das erste Mobilfunkendgerät umfasst.

12. Verfahren nach einem der Ansprüche 1 bis 11, ferner umfassend:
(x) Übermitteln, durch das erste Mobilfunkendgerät über das WLAN, von Anweisungen zum Ausführen zumindest eines Teils eines oder mehrerer der Schritte (ii), (iii), (iv), (v), (vi), (vi), (vii), (viii) und (ix), wobei die Ausführung der Anweisungen mittels eines digitalen Prozessors erfolgt, und
(xi) Empfangen der Anweisungen durch das zweite Mobilfunkendgerät.

## Revendications

1. Procédé de maintien de l'intégrité d'un groupe de voyage, le procédé comprenant les étapes consistant à :
(i) configurer un premier terminal de télécommunication mobile comme maître d'un réseau local sans fil (WLAN), le premier terminal de communication mobile étant porté par un accompagnateur ;
(ii) configurer un second terminal de télécommunication mobile comme esclave du WLAN, le second terminal de télécommunication mobile étant porté par un participant au voyage ;
(iii) surveiller, au niveau du second terminal de télécommunication mobile, l'intensité de signal d'un signal WLAN émis par le maître WLAN ;
(iv) définir un seuil minimal pour l'intensité de signal ;
(v) comparer l'intensité de signal au seuil ; et
(vi) dans le cas où l'intensité de signal devient inférieure au seuil, amener le second terminal de télécommunication mobile à se déplacer jusqu'à un endroit où l'intensité de signal n'est plus inférieure au seuil.

2. Procédé de maintien de l'intégrité d'un groupe de voyage, le procédé comprenant les étapes consistant à :
(i) configurer un premier terminal de télécommunication mobile comme maître d'un réseau local sans fil (WLAN), le premier terminal de communication mobile étant porté par un accompagnateur ;
(ii) configurer un second terminal de télécommunication mobile comme esclave du WLAN, le second terminal de télécommunication mobile étant porté par un participant au voyage ;
(iii) surveiller, au niveau du premier terminal de télécommunication mobile, l'intensité de signal d'un signal WLAN émis par l'esclave ;
(iv) définir un seuil minimal pour l'intensité de signal ;
(v) comparer l'intensité de signal au seuil ; et
(vi) dans le cas où l'intensité de signal devient inférieure au seuil, amener le second terminal de télécommunication mobile à se déplacer jusqu'à un endroit où l'intensité de signal n'est plus inférieure au seuil.

3. Procédé selon la revendication 1 ou la revendication 2, dans lequel l'étape (vi) consistant à amener le second terminal de télécommunication mobile à se déplacer comprend l'opération consistant à :
(vi-1) générer, par le second terminal de télécommunication mobile, une alerte détectable par le participant au voyage.

4. Procédé selon l'une quelconque des revendications 1 à 3, dans lequel l'étape (vi) consistant à amener le second terminal de télécommunication mobile à se déplacer comprend les opérations consistant à :
(vi-2) activer, au niveau du second terminal de télécommunication mobile, une fonction de géolocalisation pour enregistrer la position géographique du second terminal de télécommunication mobile ;
(vi-3) communiquer, à un centre de commandement central (CCC), des informations concernant le second terminal de télécommunication mobile, la communication s'effectuant par l'intermédiaire d'un réseau étendu sans fil (WWAN).

5. Procédé selon la revendication 4, dans lequel les informations concernant le second terminal de télécommunication mobile sont communiquées au CCC par le premier terminal de télécommunication mobile par l'intermédiaire du WWAN.

6. Procédé selon la revendication 4, dans lequel les informations concernant le second terminal de télécommunication mobile sont communiquées au CCC par le second terminal de télécommunication mobile par l'intermédiaire du WWAN.

7. Procédé selon l'une quelconque des revendications 1 à 6, comprenant en outre l'étape consistant à :
(vii) dans le cas où l'intensité de signal devient inférieure au seuil, communiquer des informations concernant cet événement par l'intermédiaire d'un réseau étendu sans fil (WWAN), la communication s'effectuant entre le premier terminal de télécommunication mobile et le second terminal de télécommunication mobile.

8. Procédé selon l'une quelconque des revendications 1 à 7, comprenant en outre l'étape consistant à :
(viii) communiquer, par l'intermédiaire d'un réseau étendu sans fil (WWAN), la position géographique du premier terminal de télécommunication mobile à un centre de commandement central (CCC).

9. Procédé selon l'une quelconque des revendications 1 à 8, comprenant en outre l'étape consistant à :
(ix) communiquer, par l'intermédiaire d'un réseau étendu sans fil (WWAN), la position géographique du second terminal de télécommunication mobile à un centre de commandement central (CCC).

10. Procédé selon l'une quelconque des revendications 1 à 9, dans lequel :
l'étape (iv) consistant à définir un seuil minimal pour l'intensité de signal comprend l'opération consistant à communiquer le seuil au second terminal de télécommunication mobile.

11. Procédé selon l'une quelconque des revendications 1 à 10, dans lequel :
l'étape (v) consistant à comparer l'intensité de signal au seuil comprend l'opération consistant à communiquer l'intensité de signal au premier terminal de télécommunication mobile.

12. Procédé selon l'une quelconque des revendications 1 à 11, comprenant en outre les étapes consistant à :
(x) envoyer, par le premier terminal de télécommunication mobile, par l'intermédiaire du WLAN, des instructions pour exécuter au moins une partie d'une ou plusieurs des étapes (ii), (iii), (iv), (v), (vi), (vii), (viii) et (ix), l'exécution des instructions étant assurée par un processeur numérique ; et
(xi) recevoir, par le second terminal de télécommunication mobile, les instructions.
